# EUROPEAN PATENT SPECIFICATION

(11) **EP 0 337 808 B1**
(45) Date of publication and mention of the grant of the patent: **13.10.1993**
(21) Application number: 89303728.3
(22) Date of filing: 14.04.1989
(51) Int. Cl.: G21C 21/02, G21C 3/32, G21C 19/06

(54) **Rod arraying system**
System einer Brennstabanordnung
Système d'assemblage pour les combustibles nucléaires

(30) Priority: 15.04.1988 US 181858
(43) Date of publication of application: 18.10.1989
(73) Proprietor: THE BABCOCK & WILCOX COMPANY, New Orleans, Louisiana 70160 (US)
(72) Inventor: Attix, Douglas Jeffrey, Lynchburg Virginia 24502 (US); Kelly, Michael Johnston, Lynchburg Virginia 24503 (US); Mason, Fred Lee, Lynchburg Virginia 24502 (US); Stinnett, Carlton Eugene, Lynchburg Virginia 24502 (US)
(74) Representative: Purvis, William Michael Cameron

(56) References cited:
- EP-A- 0 066 695
- US-A- 4 288 699
- US-D- 373 344

## Description

The invention relates to a rod arraying system and has particular though not exclusive application to storage of nuclear fuel rods where two fuel assemblies are consolidated into the rack space of one standard fuel assembly.

Storage space at nuclear reactor sites is very limited. This results in a need to be able to consolidate nuclear fuel being stored. A consolidation ratio of 2 to 1 can be obtained by disassembling two fuel assemblies and repackaging the fuel into one canister which will fit into the same rack space as a standard fuel assembly. Since there is seldom enough space at a utility to allow horizontal handling of fuel, the majority of existing designs and equipment directed toward fuel consolidation handle fuel in a vertical orientation. In most of these systems fuel rods are pulled or pushed from a fuel assembly in groups or bundles and put into a funnel which reconfigures the fuel rod bundle. Bundles may contain a full complement of rods for a complete fuel assembly or rods from a partial assembly. The funnel is a long device that accepts a rod bundle at one end in the same configuration as it is taken from a fuel assembly (rectangular pitch) and gradually changes the configuration of the bundle into a close packed triangular pitch rod configuration at the other end. The reconfigured rods are then fed into a canister for storage.

This approach to fuel rod consolidation has met with limited success since it does not lend itself to quick recovery from an out of ordinary situation such as a broken fuel rod. The funnel approach does not lend itself to other fuel related operations such as burnable poison rod consolidation and does not support fuel reconstitution, eddy current inspection, and recaging of damaged fuel assemblies. It can be seen that a more versatile concept is needed in this area.

Patent Specification EP-A-0 066 695 discloses a spent fuel consolidation system wherein a three station support is successively acted upon by a gripping mechanism which acts on the top of the various stations as they are brought into alignment therewith. One station is a fuel rod consolidation section wherein fuel rods are consolidated by closely packing them by a consolidation mechanism engaging into the upper end of a canister.

According to the invention there is provided a rod arraying system, comprising:
a rigid support structure;
a consolidation canister positioned in and supported by the support structure; and
means for positioning rods inside the consolidation canister mounted on the support structure adjacent the consolidation canister;
characterised in that the consolidation canister is provided with a window to receive the rod positioning means.

Thus the invention can provide a rod arraying device which uses the principle of single rod transfer. The handling of one rod at a time affords the most operational control and eliminates the chance of major portions of fuel assemblies getting hung up as a result of equipment failures, power failures, or rod breakage. The rod arraying device works in conjunction with the consolidation canister and has two scalloped plates with identical edge profiles. The plates are laid one on top of the other and offset in the front-to-back and side-to-side directions. The relative position of the plates is maintained by bearing guides which allow forward and backward cycling of the bottom guide by an air cylinder. The rod loading pattern provides gaps between rods that allow the rod arraying devices to hold each rod in position.

The invention is diagrammatically illustrated by way of example in the accompanying drawings, in which;-
Figure 1 is an overall view of a rod arraying device according to the invention;
Figure 2 is an elevation view of the rod arraying device of Figure 1;
Figure 3 is a top view of the rod arraying device of Figures 1 and 2;
Figure 4 is a view taken on line 4-4 in Figure 3;
Figure 5 is a side view of the inclined rod arraying device of Figures 1 to 4;
Figure 6 is a bottom view of a two-position locking mechanism of a rod arraying device according to the invention;
Figure 7 is a partial top view of a rod arraying device according to the invention;
Figure 8 is a view taken on line 8-8 in Figure 3;
Figure 9 is a partial top view of an inclined rod arraying device according to the invention;
Figure 10 is a view taken on line 10-10 in Figure 3; and
Figure 11 is a top partial view of a consolidation canister with fuel rods loaded in a triangular pitch.

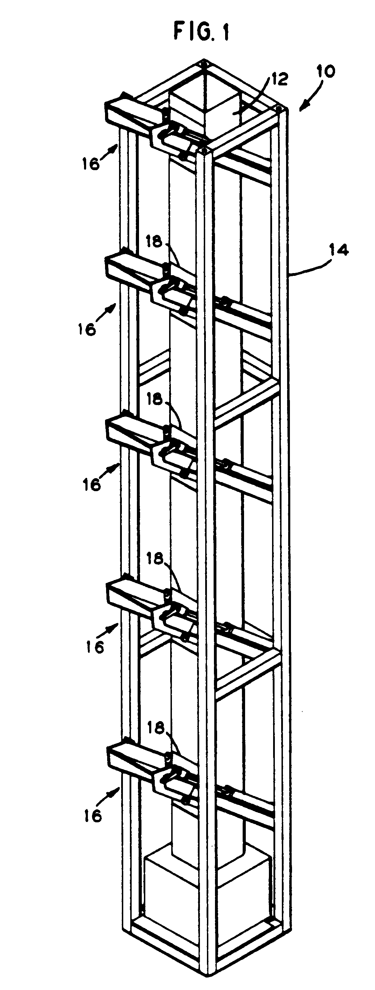

Referring to the drawings and firstly to Figure 1, a rod arraying system 10 generally comprises a consolidation canister 12, a rigid support structure 14, and a rod arraying device 16.

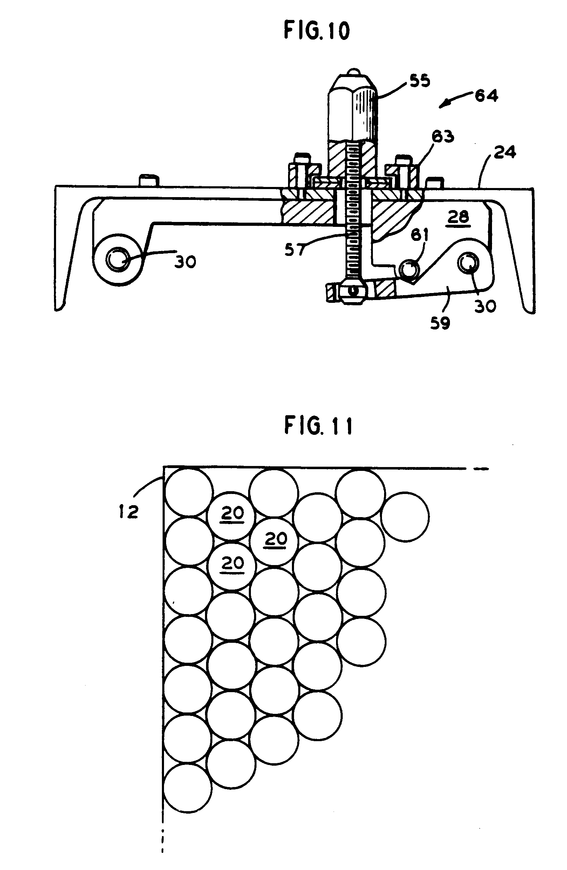

The consolidation canister 12 is essentially a standard storage and transfer canister for fuel rods and burnable poison rods which has been modified by the addition of several horizontal holes or windows 18 spaced vertically along one side. A portion of the rod arraying device 16 enters the consolidation canister 12 through each window 18 for alignment of fuel rods 20 as they are inserted into the canister 12. As can be seen in Figure 11, the rod arraying device 16 positions the fuel rods 20 in a triangular pitch configuration inside the canister 12 to achieve the desired 2 to 1 consolidation ratio. The consolidation canister 12 is supported in a vertical position by the rigid support structure 14 to receive the fuel rods 20.

The rigid support structure 14 is generally a framework structure sized to receive and support the consolidation canister 12 and has the rod arraying device 16 mounted thereon as can be seen in Figure 1.

The rod arraying device 16 generally comprises a mounting base 24 and a guide assembly 26. In the preferred embodiment, the guide assembly 26 is attached to the mounting base 24, as shown in Figure 5 and 9. The mounting base 24 is guided on the support structure 14 by way of wheels 11 and rails 13. The wheels 11, of which there are six, are mounted to the mounting base 24 by way of two mounting blocks 15, one on each side of the mounting base 24. The wheels 11 ride on the rails 13 which are mounted to the support structure 14 on an incline, such that the guide assembly 26 and the mounting base 24 is predisposed toward the inside of the canister 12. In the preferred embodiment, the rod arraying device 16 exerts a force on the rods 20, proportional to the angle of inclination and the weight of the device 16. Retraction of the inclined, rod arraying device 16 from the canister 12 for removal of the device or for the purpose of installing or removing the canister 12 is accomplished in one of two ways. A cylinder 17, shown in Figures 5 and 9 is attached to the support structure 14 and the rod of the cylinder 17 bears against the mounting base 24 such that extension of the rod pushes the rod arraying device 16 out of the canister 12. Retraction of the rod arraying device 16 is maintained by keeping pressure on the cylinder 17. A latch 19 is provided as a redundant feature and is pivotally attached to the mounting block 15. A roller 21 of the latch 19 rides on the rail 13. Upon withdrawal of the inclined, rod arraying device 16 from the canister 12, the latch 19 catches on the upper end of the rail 13 and holds the rod arraying device 16 in the retracted position. The latch 19 is disengaged by operating a release mechanism 23 mounted on the support structure 14, or by a hook on the end of a remotely operated pole (not shown). For exclusive use of the cylinder 17, the latch 19 can be made inoperative by rotating the latch back against the mounting block 15.

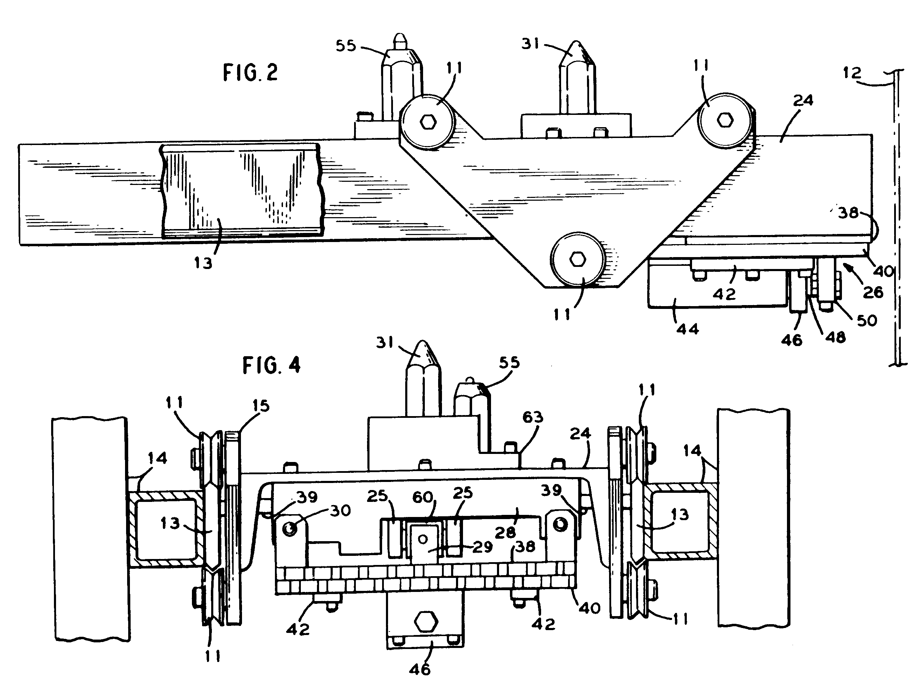

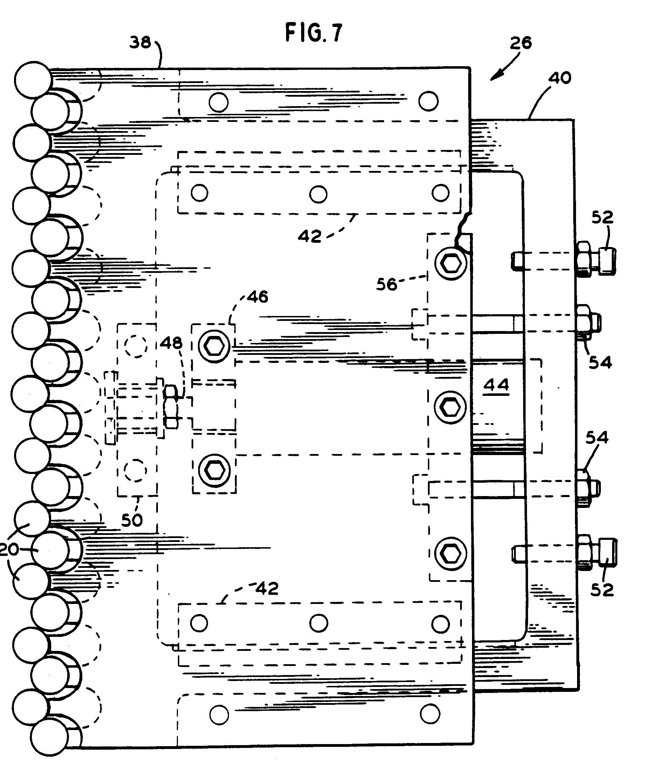

The guide assembly 26 comprises two guide plates 38, 40 as best shown in Figure 2, 4 and 7. As shown in Figure 7 the guide plates 38, 40 have identical front scalloped edges which are sized to fit nuclear fuel rods and burnable poison rods. The plates are positioned one over the other in a front-to-back and side-to-side offset configuration such that the projections on the front edges of the plates alternate between the two plates. The lower guide plate 40 is slidably mounted to the upper guide plate 38 by means of bearing guides 42 to permit forward and backward cycling of the lower guide plate 40 during operation. The bearing guides 42 are mounted to the underside of the upper guide plate 38 and the upper guide plate 38 is slidably mounted on the mounting base 24 by means of guide bars 30.

Means for causing forward and backward cycling of the lower guide plate 40 relative to the upper guide plate 38 is provided in the form of an air cylinder 44. As shown in Figure 2 the air cylinder 44 is mounted to a block 46 which extends from the bottom of the upper guide plate 38. A cylinder rod 48 extends forward of the air cylinder 44 and is attached to a plate 50 which extends downwardly from the lower guide plate 40. In this manner, cycling of the air cylinder 44 causes the cylinder rod 48 and the lower guide plate 40 to move forward and backward relative to the upper guide plate 38. The range of relative motion between the two guide plates is controlled by the cylinder stroke, or by adjustable forward stops 52 and rearward stops 54 shown in Figure 7. The forward stops 52 are threadably engaged in and extend forwardly through lower guide plate 40 to control forward travel by making contact with a stop bar 56. The rearward stops 54 are slidably engaged in the stop bar 56 and extend rearwardly thereof in threaded engagement with the lower guide plate 40 to control rearward travel of the lower guide plate 40.

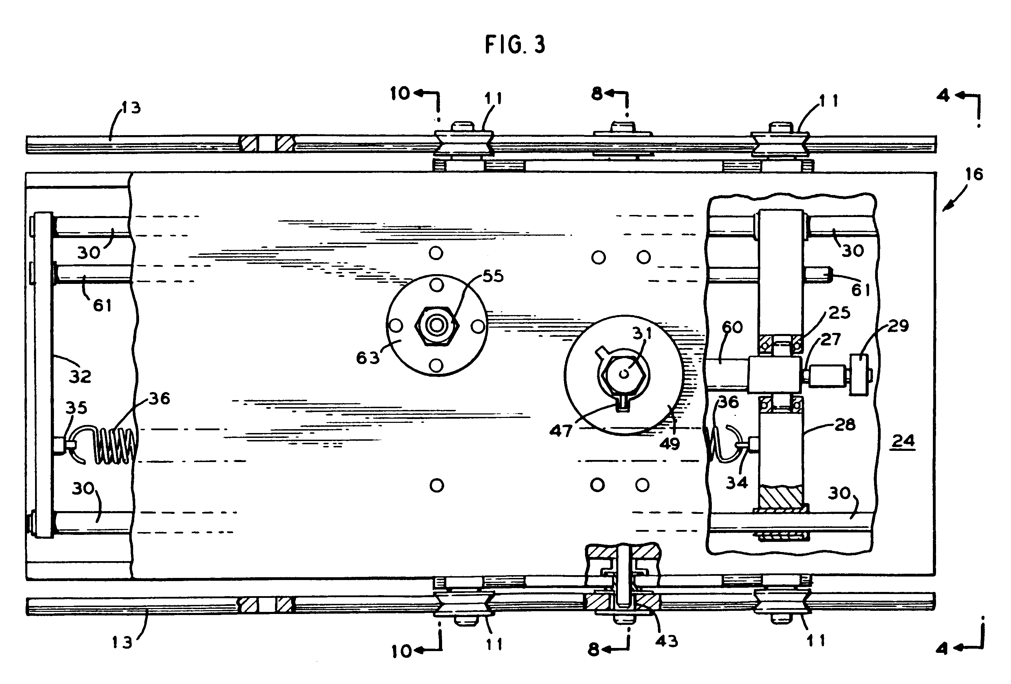

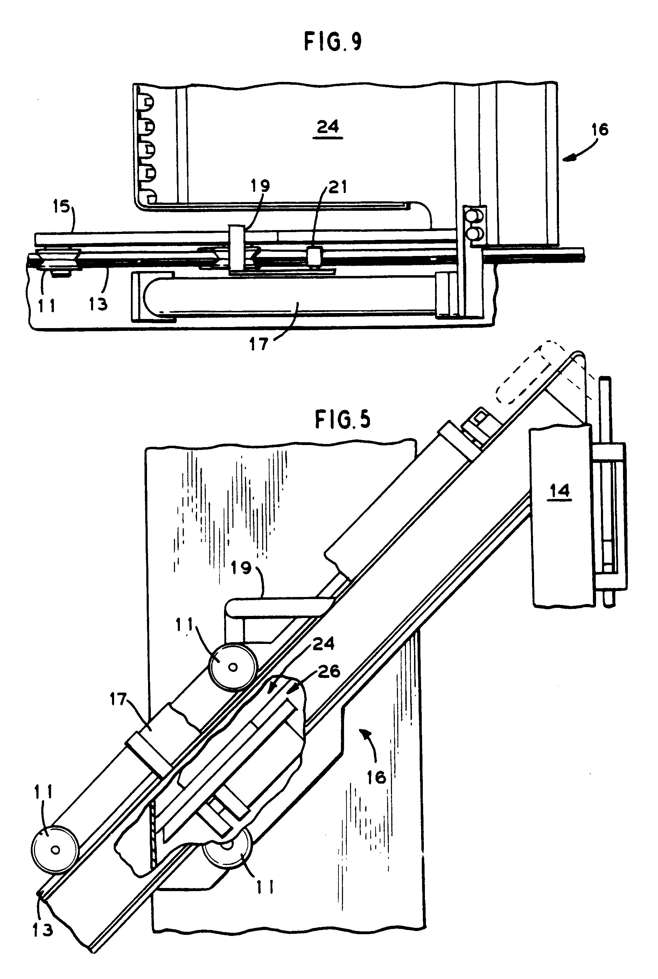

In an alternate embodiment the rod arraying device 16 may be positioned in a horizontal orientation relative to the canister 12. The mounting base 24 is provided with bearing blocks 28 with bores therethrough sized slidably to receive the guide bars 30. As shown in Figures 3 and 4 the guide bars 30 are mounted on the top of the guide assembly 26 and extend rearwardly therefrom. Bushings may also be mounted in the bores provided to reduce friction and wear between the bearing blocks 28 and the guide bars 30. For ease of illustration, the structural differences of the alternate embodiment are shown as additional structure in the drawings of the preferred embodiment. A cross bar 32 is attached to and bridges the end of the guide bars 30 furthest from the guide assembly 26. An attachment position is provided for a spring in the alternate embodiment as illustrated in Figure 3. A first fixed spring anchor 34 is provided near the forward end of the mounting base 24 and may be attached to the bearing block 28. A second spring anchor 35 is attached to the cross bar 32. A spring 36 is attached between the two anchors 34, 35. Since the guide bars 30 are attached to the guide assembly 26, the spring and anchor combination serves as a means for biasing the guide assembly 26 forward away from the mounting base 24 and toward and into the consolidation canister 12. The mounting base 24 is prevented from rolling by way of a two-position locking mechanism 62.

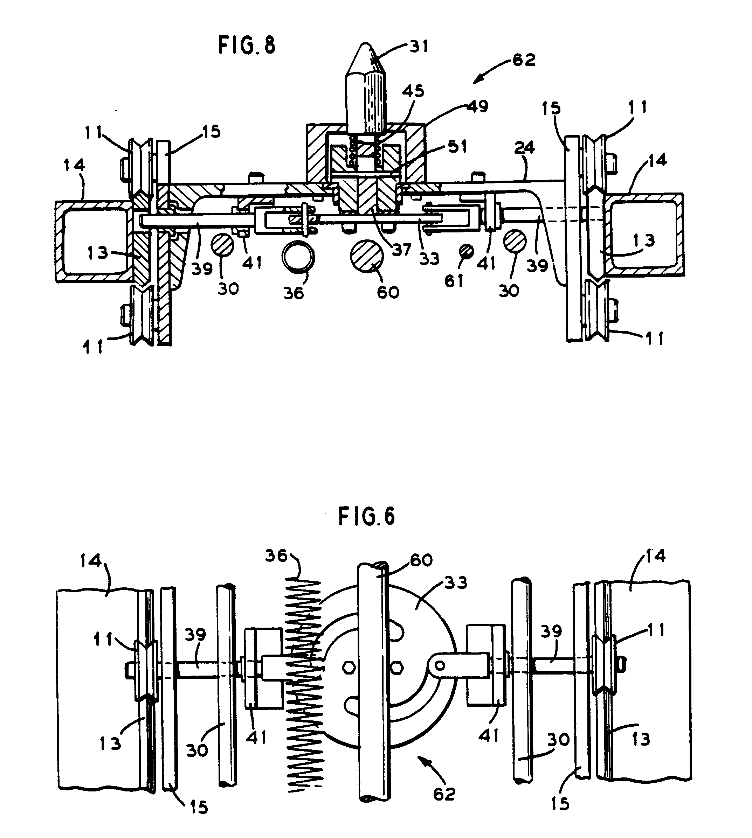

In the alternate embodiment means for locking the guide assembly 26 in a retracted position to allow removal and installation of the consolidation canister 12 is provided in the form of the two-position locking mechanism 62 shown in Figure 6 and 8. The two-position locking mechanism 62 is actuated by rotating a nut 31 connected to a cam 33 by way of a shaft 37. Rotation of the cam 33 provides push-pull motion to locking shafts 39. The cam 33 is provided with slots to which the locking shafts 39 are pivotally attached. The locking shafts 39 are slidably engaged to the mounting base 24 by way of guide blocks 41. In addition to the guide blocks 41, the locking shafts 39 are also slidably engaged in holes in the mounting base 24. When the locking mechanism 62 is actuated, the locking shafts 39 engage holes 43 in the rails 13 as shown in Figure 3 and 8. There are two sets of holes in the rails 13. One set is for locking the rod arraying device 16 in the outermost position, out of the canister 12 for canister installation and removal operations. The second set of holes is used to lock the rod arraying device 16 in place during canister loading. The nut 31 is biased upwardly by a spring 45, and in the upward position the nut 31 is prevented from turning by a pin 47 which is fixed to the nut 31 and protrudes from the nut 31 into a slot in a locking plate 49. The nut 31 can be rotated by a socket on the end of a remotely operated pole (not shown). When a small, downward force is applied to the nut 31, the pin 47 disengages from the locking plate 49 and the nut 31 is free to rotate. Vertical travel of the nut 31 and the shaft 37 is limited by the length of a slot in the shaft 37 and a vertical limit pin 51 which is fixed in a guide post 53.

In the alternate embodiment means for locking out the spring tension between the guide assembly 26 and the mounting base 24 is provided in the form of a guide extension lock 64 shown in Figure 10. In the case of remote removal of the rod arraying device 16 (as when in need of repair), the guide extension lock 64 is used. The guide extension lock 64 provides a way to lock the guide assembly 26 at any position in its travel, negating the effect of the spring 36, and facilitating subsequent unlatching of the two-position locking mechanism 62. Before remote installation of the rod arraying device 16 (such as after repair), the guide extension lock 64 is locked so that the extension of the guide assembly 26 falls short of the last row of rods 20 when the rod arraying device 16 is latched in a locked-in position (by operating the two-position, locking mechanism 62). After the rod arraying device 16 is latched in the locked-in position, the guide extension lock 64 is released so that the guide assembly 26 can approach and rest against the rods 20. The guide extension lock 64 is actuated by rotating the nut 55 which is fixed to a threaded stud 57. The threaded stud 57 is pivotally attached to a clamping arm 59 which is pivotally attached to the rear bearing block 28. The rear bearing block 28 is provided with a clearance hole for a guide rod 61. The clamping arm 59 is provided with a notch to facilitate clamping of the guide rod 61. The guide rod 61 is attached to a movable spring anchor 32. A nut 55 can be rotated by a socket on the end of a remotely operated tool (not shown). The nut 55 is captured by a cap 63 but is free to rotate.

Means for dampening the movement of the guide assembly 24 is provided in the form of a dashpot 60 shown in Figure 3. After remote installation of the rod arraying device 16, and after latching the rod arraying device 16 in the locked-in position, the guide extension lock 64 is released. Upon release, the dashpot 60 works to slow the advancement of the guide assembly 26 into the canister 12. The dashpot 60 is a cylinder which draws in and expels pool water through orifices mounted in cylinder ports. The dashpot 60 is trunnion mounted to the front bearing block 28 in pivot blocks 25. A cylinder rod 27 is attached to a rod mounting block 29 which is attached to the upper guide plate 38.

During operation, the consolidation canister 12 is first placed in position. Before installation of the canister 12, each rod arraying device 16 is placed in the locked-out position using either the cylinder 17 or the two-position locking mechanism 62. With the rod arraying device 16 in position on the support structure 14, the guide assembly 26 is inserted into the canister 12 through the window 18. The lower guide plate 40 is retracted relative to the upper guide plate 38 at the start so that the upper guide plate 38 bears against the inside wall of the canister 12. It can be seen in Figure 1 that a plurality of rod arraying devices 16 are used in the preferred embodiment along the longitudinal axis of the canister 12. The fuel rods 20 are loaded one at a time into the canister 12 through the scallop spaces in the upper guide plate 38. The loading pattern of the rods provides gaps between adjacent rods in each row which allow the projections (front scalloped edges) to hold each rod in position. After the first row is loaded the guide assembly 26 is cycled to cause the lower guide plate 40 to extend forward beyond the upper guide plate 38. This places the projections on the lower guide plate 40 against the first row of fuel rods 20, holds the first row against the inside surface of the canister 12, and provides room for loading the second row through the scallop spaces on the lower guide plate 40. Once the second row is loaded, the lower guide plate 40 is retracted. Pressure from the weight of the inclined rod arraying device 16 then biases the projections of the upper guide plate 38 against the second row of the fuel rods 20. This provides room for loading the third row through the scallop spaces in the upper guide plate 38. It can be seen that this is essentially a repetition of the position of the device used in loading the first row. The process is then repeated until the canister 12 is full or the desired consolidation ratio is achieved.

## Claims

1. A rod arraying system, comprising:
a rigid support structure (14);
a consolidation canister (12) positioned in and supported by the support structure (14); and
means (16) for positioning rods (20) inside the consolidation canister (12) mounted on the support structure (14) adjacent the consolidation canister (12);
characterised in that the consolidation canister (12) is provided with a window (18) to receive the rod positioning means (16).

2. A rod arranging system according to claim 1, wherein the rod positioning means (16) comprises:
a mounting base (24) slidably attached to the support structure (14) on an incline; and
a guide assembly (26) attached to the mounting base (24).

3. A rod arraying system according to claim 2, wherein the guide assembly (26) comprises:
an upper guide plate (38) mounted on the mounting base (24);
a lower guide plate (40) slidably mounted on the upper guide plate (38); and
means (44) for causing forward and backward cycling of the lower guide plate (40) relative to the upper guide plate (38).

4. A rod arraying system according to claim 2, further comprising means (60) to damp the movement of guide assembly (26).

5. A rod arraying system according to claim 2, further comprising means (31, 39) to lock the mounting base (24) and the guide assembly (26) in a retracted position away from the consolidation canister (12).

6. A rod arraying system according to claim 3, wherein the cycling means comprises an air cylinder (44) mounted on the upper guide plate (38) and in operative engagement with the lower guide plate (40).

7. A rod arraying system according to claim 3, wherein the lower guide plate (40) is mounted on the upper guide plate (38) in an offset side-to-side and front-to-back configuration.

8. A rod arraying system according to claim 3, wherein the upper (38) and lower (40) guide plates are provided with identical front scalloped edges.

## Patentansprüche

1. Stabanordnungssystem mit
einer starren Trägerstruktur (14),
einem Festigungskanister (12), der in der Trägerstruktur (14) angeordnet und von dieser getragen wird, und
Einrichtungen (16) zur Positionierung von Stäben (20) im Inneren des Festigungskanisters (12), die an der Trägerstruktur (14) nahe dem Festigungskanister (12) befestigt sind,
**dadurch gekennzeichnet,** daß der Festigungskanister (12) mit einem Fenster (18) zur Aufnahme der Stabpositioniereinrichtungen (16) versehen ist.

2. Stabanordnungssystem nach Anspruch 1, bei dem die Stabpositioniereinrichtungen (16) eine Befestigungsbasis (24), die gleitbar an der Trägerstruktur (14) in einer Neigung befestigt ist, und eine an der Befestigungsbasis (24) befestigte Führungsanordnung (26) umfaßt.

3. Stabanordnungssystem nach Anspruch 2, in dem die Führungsanordnung (26) eine obere, auf der Befestigungsbasis (24) befestigte Führungsplatte (38),
eine auf der oberen Führungsplatte (38) gleitbare befestigte untere Führungsplatte (40) und
Einrichtungen (44), die ein zyklisches Vor- und Zurücklaufen der unteren Führungsplatte (40) in Bezug auf die obere Führungsplatte (38) verursachen, umfaßt.

4. Stabanordnungssystem nach Anspruch 2, das zusätzlich Einrichtungen (60) zur Dämpfung der Bewegung der Führungsanordnung (26) umfaßt.

5. Stabanordnungssystem nach Anspruch 2, das zusätzlich Einrichtungen (31,39) umfaßt, die die Befestigungsbasis (24) und die Führungsanordnung (26) in einer zurückgezogenen Stellung von dem Festigungskanister (12) weg verriegeln.

6. Stabanordnungssystem nach Anspruch 3, bei dem die zyklische Laufeinrichtung einen Luftzylinder (44) umfaßt, der auf der oberen Führungsplatte (38) befestigt ist und in Wirkungseingriff mit der unteren Führungsplatte (40) steht.

7. Stabanordnungssystem nach Anspruch 3, bei dem die untere Führungsplatte (40) auf der oberen Führungsplatte (38) versetzt Seite an Seite und Vorderseite an Rückseite befestigt ist.

8. Stabanordnungssystem nach Anspruch 3, bei dem die obere Führungsplatte (38) und die untere Führungsplatte (40 mit identischen Vorderkanten mit bogenförmigen Ausschnitten versehen sind.

## Revendications

1. Un système d'assemblage pour les combustibles nucléaires, comprenant:
une structure de support rigide (14);
un caisson de rassemblage (12) placé dans et supporté par la structure de support (14); et
des moyens (16) de positionnement des barres de combustible (20) dans le caisson de rassemblage (12) montés sur la structure de support (14) adjacents au caisson de rassemblage (12);
caractérisé en ce que le caisson de rassemblage (12) comporte une fenêtre (18) pour recevoir les moyens de positionnement des barres(16).

2. Un système d'assemblage pour les combustibles nucléaires selon la revendication 1, caractérisé en ce que les moyens de positionnement des barres (16) comprennent:
une base de montage (24) fixée de manière coulissante à la structure de support (14) suivant un plan incliné; et
un ensemble de guidage (26) fixé à la base de montage (24)

3. Un système d'assemblage pour les combustibles nucléaires selon la revendication 2, caractérisé en ce que l'ensemble de guidage (26) comprend:
une plaque de guidage supérieure (38) montée sur la base de montage (24);
une plaque de guidage inférieure (40) montée de manière coulissante sur la plaque de guidage supérieure (38); et
des moyens (44) de provoquer un mouvement cyclique en avant et en arrière de la plaque de guidage inférieure (40) par rapport à la plaque de guidage supérieure (38).

4. Un système d'assemblage pour les combustibles nucléaires selon la revendication 2, caractérisé en ce qu'il comprend en outre les moyens (60) pour amortir le mouvement de l'ensemble de guidage (26).

5. Un système d'assemblage pour les combustibles nucléaires selon la revendication 2, caractérisé en ce qu'il comprend en outre des moyens (31,39) de verrouiller la base de montage (24) et l'ensemble de guidage (26) dans une position rétractée à l'écart du caisson de rassemblage(12).

6. Un système d'assemblage pour les combustibles nucléaires selon la revendication 3, caractérisé en ce que les moyens de mise en mouvement cyclique comprennent un vérin pneumatique (44) monté sur la plaque de guidage supérieure (38) et engagé en fonctionnement avec la plaque de guidage inférieure (40).

7. Un système d'assemblage pour les combustibles nucléaires selon la revendication 3, caractérisé en ce que la plaque de guidage inférieure (40) est montée sur la plaque de guidage supérieure (38) suivant une configuration présentant un décalage avant-arrière et latéral.

8. Un système d'assemblage pour les combustibles nucléaires selon la revendication 3, caractérisé en ce que dans les plaques de guidage supérieure (38) et inférieure (40) sont prévus des bords échancrés de profil identique.
